# FASCICULE DE BREVET EUROPEEN

(11) **EP 2 953 816 B1**
(45) Date de publication et mention de la délivrance du brevet: **15.03.2017**
(21) Numéro de dépôt: 14704615.5
(22) Date de dépôt: 27.01.2014
(51) Int. Cl.: B60N 2/48

(54) **APPUI-TÊTE DE SIÈGE DE VÉHICULE AUTOMOBILE**
KOPFSTÜTZE FÜR EINEN KRAFTFAHRZEUGSITZ
HEADREST FOR A MOTOR VEHICLE SEAT

(30) Priorité: 07.02.2013 FR 1351078; 07.02.2013 FR 1351077
(43) Date de publication de la demande: 16.12.2015
(73) Titulaire: Cera TSC, 75008 Paris (FR)
(72) Inventeur: BONFILS, Xavier, F-51100 Reims (FR)
(74) Mandataire: Sayettat, Julien Christian
(86) Numéro de dépôt international: PCT/FR2014/050149
(87) Numéro de publication internationale: WO 2014/122379

(56) Documents cités:
- EP-A1- 2 361 801
- WO-A2-2012/118341
- DE-A1- 10 125 757
- DE-A1-102006 004 905
- DE-A1-102010 044 946
- US-A1- 2008 252 112
- US-A1- 2010 140 987

## Description

L'invention concerne un appui-tête de siège de véhicule automobile (cf. par exemple US 2010/0140987 A1, correspondant au préambule de la revendication indépendante).

Il est connu de réaliser un appui-tête de siège de véhicule automobile, ledit appui-tête comprenant :
- une partie fixe de support destinée à être associée en haut du dossier dudit siège,
- une partie mobile d'appui de la tête associée par un dispositif de liaison à ladite partie fixe, ledit dispositif étant agencé de manière à permettre un déplacement vertical et longitudinal de ladite partie mobile afin de pouvoir la disposer selon une pluralité de positions de réglage,
- deux mécanismes de verrouillage vertical et longitudinal respectifs de ladite partie mobile dans la position de réglage choisie.

Dans toute la description, les termes de positionnement dans l'espace (haut, bas, longitudinal, latéral, avant, arrière, vertical, transversal,...) sont pris en référence à l'appui-tête disposé dans le véhicule avec le dossier du siège en position sensiblement verticale d'utilisation et la partie mobile de l'appui-tête réglée longitudinalement au maximum vers l'avant.

Dans l'agencement sus décrit, le fait de prévoir deux mécanismes de verrouillage implique la mise en oeuvre d'une grande quantité de composants pour assurer le réglage vertical et longitudinal.

En outre, afin de permettre un réglage aisé de la partie mobile, il est nécessaire de prévoir un dispositif de déverrouillage permettant de déverrouiller de façon simultanée les deux mécanismes de verrouillage, notamment par le biais d'un bouton d'actionnement unique.

Cette exigence ajoute une complexification supplémentaire à la conception de l'appui-tête.

L'invention a pour but de pallier ces inconvénients.

A cet effet, l'invention propose un appui-tête de siège de véhicule automobile, ledit appui-tête comprenant :
- une partie fixe de support destinée à être associée en haut du dossier dudit siège,
- une partie mobile d'appui de la tête associée par un dispositif de liaison à ladite partie fixe, ledit dispositif étant agencé de manière à permettre au moins un déplacement vertical et longitudinal de ladite partie mobile afin de pouvoir la disposer selon une pluralité de positions de réglage,
- un mécanisme de verrouillage de ladite partie mobile dans la position de réglage choisie,
ledit mécanisme comprenant :
- une surface de verrouillage solidaire d'une desdites parties et un organe de verrouillage solidaire de l'autre desdites parties, ledit organe étant mobile entre une configuration de déverrouillage, où il est à distance de ladite surface, et une configuration de verrouillage, où il coopère avec ladite surface selon une pluralité de positions verticales et longitudinales sur ladite surface, de manière à permettre le verrouillage de ladite partie mobile dans la position de réglage choisie,
- un dispositif de déverrouillage agencé pour écarter ledit organe de ladite surface, afin de permettre de modifier le réglage de ladite partie mobile, caractérisé en ce que l'organe et la surface sont pourvus d'un réseau croisé de butées respectives agencées pour coopérer entre elles en configuration de verrouillage et en ce que les butées sont en forme de pyramides inclinées à la base carrée, de façon à présenter quatre faces d'appui, de manière à réaliser un verrouillage vertical et longitudinal bidirectionnels.

Avec l'agencement proposé, basé sur l'utilisation d'une surface et d'un organe de verrouillage, ledit organe pouvant coopérer avec ladite surface selon une pluralité de positions, on simplifie de façon importante la réalisation de l'appui-tête, ceci du fait qu'on utilise un mécanisme de verrouillage unique et du fait que le déverrouillage se fait par simple écartement de l'organe de la surface.

D'autres particularités et avantages de l'invention apparaîtront dans la description qui suit, faite en référence aux figures jointes dans lesquelles :
- les figures 1 sont des vues partielles latérale (1 a), en perspective par l'arrière (1b) et en perspective par l'avant (1 c) d'un appui-tête selon un premier mode de réalisation, ledit appui-tête étant monté sur un dossier de siège, la partie mobile étant en position verticale haute et longitudinale arrière,
- la figure 2 est analogue à la figure 1c, la partie mobile étant en position verticale basse et longitudinale arrière,
- la figure 3 est analogue à la figure 1c, la partie mobile étant en position verticale basse et longitudinale avant,
- la figure 4 est analogue à la figure 1c, la partie mobile étant en position verticale haute et longitudinale avant,
- la figure 5 est une vue en perspective éclatée de l'appui-tête selon le premier mode de réalisation,
- la figure 6 est une vue en perspective par l'arrière de l'appui-tête selon le premier mode de réalisation montrant le dispositif de déverrouillage selon une réalisation,
- la figure 7 est une vue en perspective par l'avant de l'appui-tête selon les figures précédentes, avec retrait de certains composants, illustrant schématiquement la faculté de régler la partie mobile selon une pluralité de positions verticales et longitudinales,
- la figure 8 est une vue partielle en perspective d'une surface de verrouillage selon une réalisation,
- la figure 9 est une vue partielle en coupe verticale - ou longitudinale - de la surface représentée en figure 8, un organe de verrouillage coopérant avec ladite surface,
- la figure 10 est une vue de face de deux organes de verrouillage mis en contrainte par moyen ressort pour les actionner vers leur configuration de verrouillage,
- la figure 11 est une vue partielle latérale en perspective par l'arrière d'un appui-tête selon un deuxième mode de réalisation, ledit appui-tête étant monté sur un dossier de siège, la partie mobile étant en position verticale haute et longitudinale avant,
- la figure 12 est une représentation en perspective d'un appui-tête comprenant une coque solidaire de la partie mobile et logeant la partie fixe, le dispositif de liaison et le dispositif de verrouillage.

En référence aux figures, on décrit un appui-tête 1 de siège de véhicule automobile, ledit appui-tête comprenant :
- une partie fixe 2 de support destinée à être associée en haut du dossier 3 dudit siège,
- une partie mobile 4 d'appui de la tête, notamment destinée à recevoir un coussin d'appui, associée par un dispositif de liaison à ladite partie fixe, ledit dispositif étant agencé de manière à permettre au moins un déplacement vertical et longitudinal de ladite partie mobile afin de pouvoir la disposer selon une pluralité de positions de réglage,
- un mécanisme de verrouillage de ladite partie mobile dans la position de réglage choisie,
ledit mécanisme comprenant :
- une surface de verrouillage 5 solidaire d'une desdites parties et un organe de verrouillage 6 solidaire de l'autre desdites parties, ledit organe étant mobile entre une configuration de déverrouillage, où il est à distance de ladite surface, et une configuration de verrouillage, où il coopère avec ladite surface selon une pluralité de positions verticales et longitudinales sur ladite surface, de manière à permettre le verrouillage de ladite partie mobile dans la position de réglage choisie,
- un dispositif de déverrouillage agencé pour écarter ledit organe de ladite surface, afin de permettre de modifier le réglage de ladite partie mobile.

Selon les réalisations représentées, l'appui-tête 1 comprend en outre un moyen ressort 7 d'actionnement de l'organe 6 vers sa configuration de verrouillage lorsque le dispositif de déverrouillage n'est pas activé.

Selon les réalisations représentées, l'organe 6 est monté sur la partie fixe 2, la surface 5 étant montée sur la partie mobile 4.

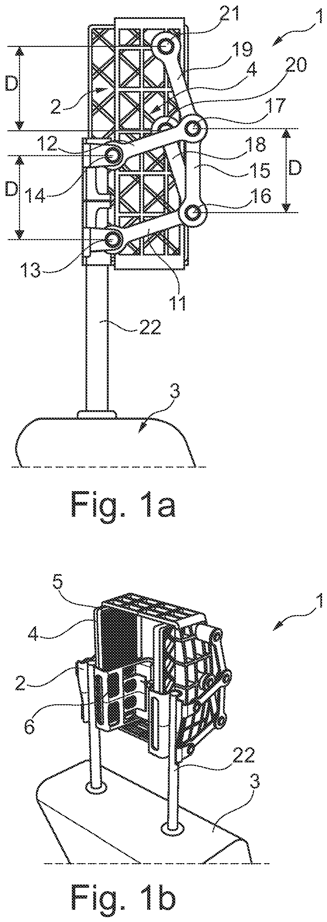

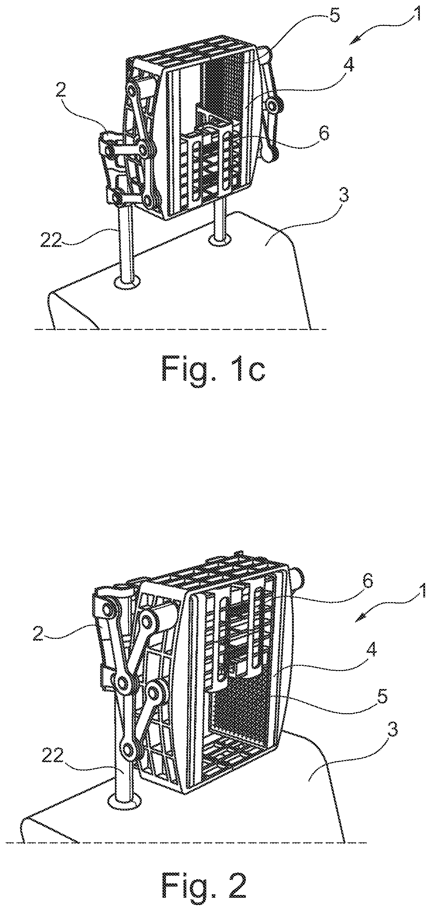

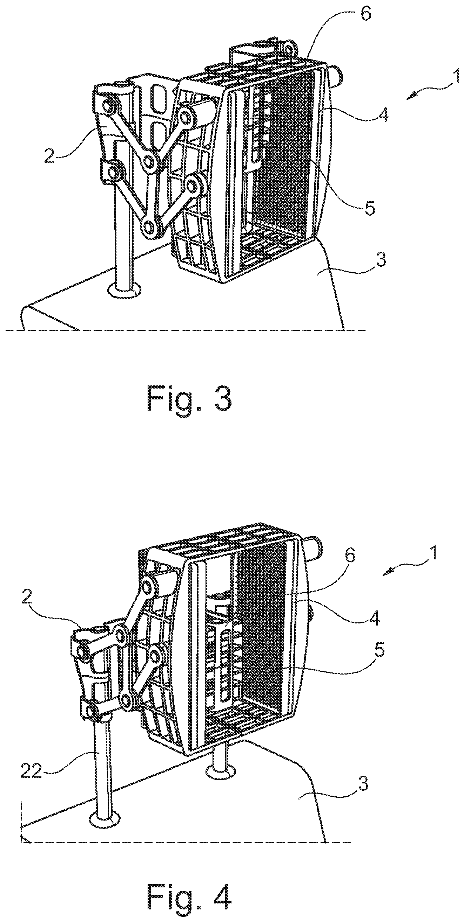

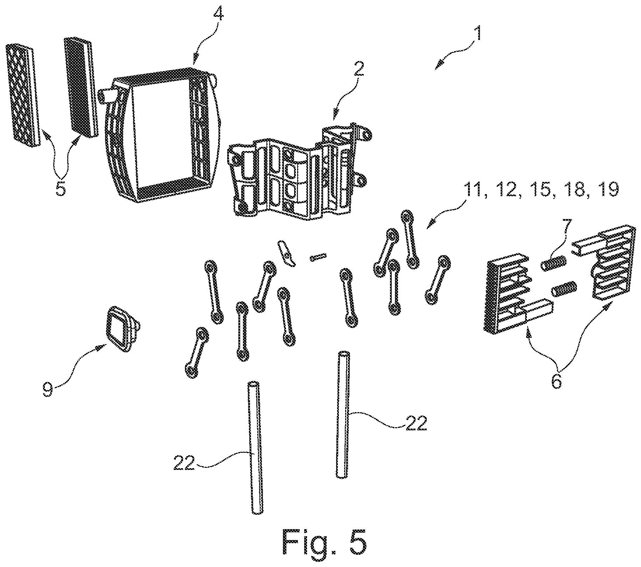

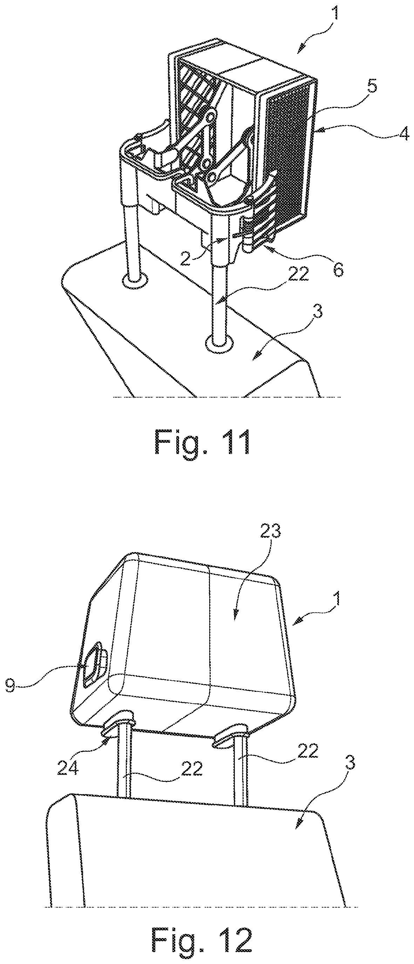

Les parties fixe 2 et mobile 4 sont notamment à base de matériau plastique moulé, la surface 5 pouvant être, de façon non représentée, moulée d'un bloc avec ladite partie mobile.
Selon le premier mode de réalisation représenté en figures 1-7 et 10, l'organe 6 est monté mobile en translation, ici transversale.
Selon le deuxième mode de réalisation représenté en figure 11, l'organe 6 est monté mobile en rotation, ici selon deux axes verticaux.
Selon les réalisations représentées, la surface 5 s'étend selon un plan vertical longitudinal.

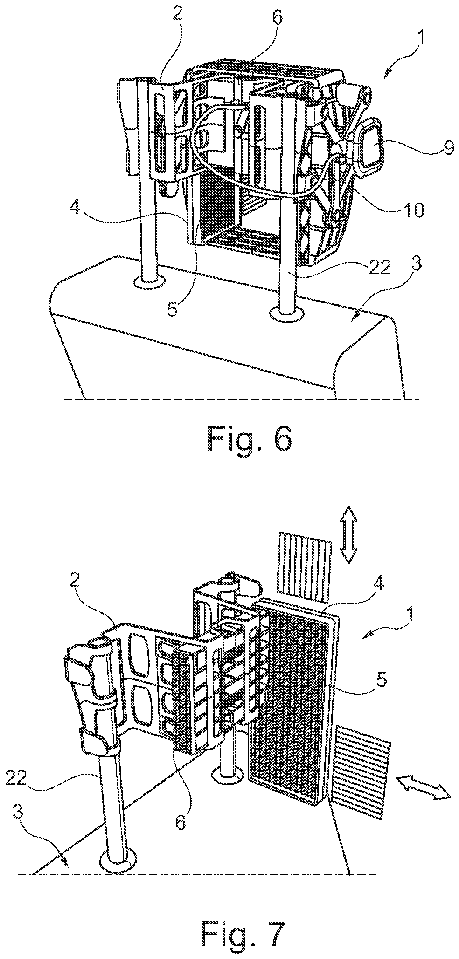

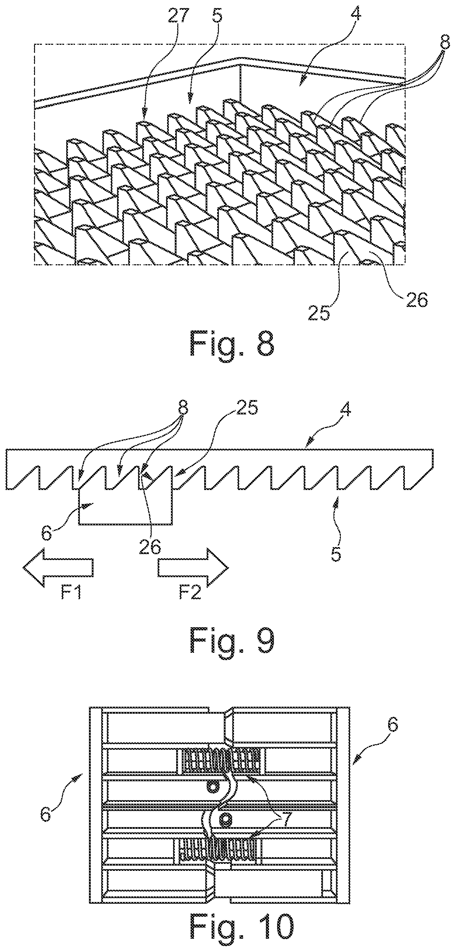

Selon l'invention telle que définie par les caractéristiques techniques de la revendication indépendante, ainsi que les réalisations représentées, l'organe 6 et la surface 5 sont pourvus d'un réseau croisé de butées 8 respectives agencées pour coopérer entre elles en configuration de verrouillage.
Selon la réalisation représentée notamment en figures 7 et 8, les butées 8 sont alignées verticalement et longitudinalement.
Le nombre de butées 8 par unité de longueur, dans les directions verticale et longitudinale, peut être aisément adaptée à la finesse de réglage choisie.
Dans la mesure où l'on met en prise une pluralité de butées 8, issues de la surface 5 et de l'organe 6, ces dernières peuvent être de très faible dimension, permettant donc un réglage très fin, sans nuire à l'efficacité du verrouillage.
En effet, on met en jeu une multiplicité de « micro verrouillages » réalisés par une multiprise entre une multiplicité de paires de butées 8 réciproques issues respectivement de la surface 5 et de l'organe 6, selon un principe de crémaillère.

Selon l'invention telle que définie par les caractéristiques techniques de la revendication indépendante, ainsi que la réalisation représentée en figure 8, les butées sont en forme de pyramides inclinées à base carrée, de façon à présenter quatre faces d'appui 25,26, de manière à réaliser un verrouillage vertical et longitudinal bidirectionnels.
Comme on le voit sur la figure 8, la surface 5 est pourvue d'un rebord 27 de confinement de l'organe 6 sur ladite surface, de manière à circonscrire les plages de réglage vertical et longitudinal de la partie mobile 4.
Selon la réalisation représentée en figure 9, les faces d'appui 25 mises en jeu entre deux butées 8 coopérant entre elles lorsqu'une d'une force F1 est appliquée vers le bas ou vers l'arrière sont inscrites dans des plans sensiblement orthogonaux aux directions de ladite force, de sorte qu'un déplacement de la partie mobile 4 vers le bas ou vers l'arrière requière un actionnement du dispositif de déverrouillage.
Selon la réalisation représentée en figure 9, les faces d'appui 26 mises en jeu entre deux butées 8 coopérant entre elles lorsqu'une d'une force F2 est appliquée vers le haut ou vers l'avant sont agencées, étant ici inscrites dans des plans formant un angle aigu avec ladite force, de manière à permettre un déplacement de la partie mobile 4 vers le haut et vers l'avant sans actionnement du dispositif de déverrouillage, ceci sous réserve d'appliquer un effort suffisant pour passer d'une position de réglage à l'autre par effet de coulisseau.
Selon la réalisation représentée en figure 6, le dispositif de déverrouillage comprend un bouton 9 - ici poussoir - d'actionnement de l'organe 6 à distance de la surface 5.
Selon la réalisation représentée en figure 6, le bouton 9 est relié à l'organe 6 au moins par le biais d'un câble Bowden 10, ceci permettant une grande latitude de conception dans le positionnement dudit bouton.

Selon les réalisations représentées, le mécanisme de verrouillage comprend deux surfaces 5 et deux organes 6 respectifs, lesdits organes, de même que lesdites surfaces, étant disposés symétriquement par rapport à un plan de symétrie vertical longitudinal dudit appui-tête, la mise en configuration de déverrouillage desdits organes étant assurée par un dispositif de déverrouillage commun.

Selon le premier mode de réalisation représenté en figures 1-7 et 10, les organes 6 sont disposés entre les surfaces 5, le verrouillage se faisant par écartement desdits organes l'un de l'autre.

Selon le deuxième mode de réalisation représenté en figure 11, les surfaces 5 sont disposées entre les organes 6, le verrouillage se faisant par rapprochement desdits organes l'un de l'autre.

Selon les réalisations représentées, et plus particulièrement en figure 1a, le dispositif de liaison comprend un premier jeu de bielles pourvu de :
- deux bielles arrière 11,12 de même longueur dont les extrémités arrière sont articulées à la partie fixe 2 selon un premier 13 et un deuxième 14 axes transversaux écartés d'une distance donnée D,
- une bielle médiane 15 articulée par ses extrémités aux extrémités avant desdites bielles arrière selon un troisième 16 et un quatrième 17 axes transversaux écartés de ladite distance donnée,
- deux bielles avant 18,19 de même longueur dont les extrémités arrière sont articulées auxdites bielles médiane et arrière selon lesdits troisième et quatrième axes, lesdites bielles avant étant articulées par leurs extrémités avant à la partie mobile 4 selon un cinquième 20 et un sixième 21 axe transversaux écartés de ladite distance donnée.

Avec cet agencement, on met en jeu un principe de « double parallélogramme » permettant une conservation de l'assiette de la partie mobile 4 tout en permettant son réglage selon une pluralité de positions verticales - respectivement longitudinales - pour un réglage longitudinal - respectivement vertical - donné. Ceci permet de s'affranchir d'un dispositif complémentaire de réglage en hauteur, tel qu'utilisé dans les réalisations de l'art antérieur, permettant de faire coulisser verticalement la partie fixe par rapport au dossier du siège.

Selon la réalisation représentée, le premier 13 et le deuxième 14 axes en vue latérale sont sensiblement alignés verticalement.

Selon les réalisations représentées, le dispositif de liaison comprend en outre un deuxième jeu de bielles (11,12,15,18,19) image du premier jeu par rapport à un plan de symétrie vertical longitudinal.

Selon une réalisation, au moins certaines des bielles 11,12,15,18,19 sont articulées entre elles par des rivets serrant de manière à assurer un maintien en place de la partie mobile 4 par friction lors de la mise en configuration de déverrouillage.

Bien entendu, le dispositif de liaison sus-décrit peut être utilisé pour tout appui-tête de siège de véhicule automobile comprenant :
- une partie fixe de support destinée à être associée en haut du dossier dudit siège,
- une partie mobile d'appui de la tête associée par ledit dispositif à ladite partie fixe.

A cet effet, l'invention concerne également un appui-tête de siège de véhicule automobile, ledit appui-tête comprenant :
- une partie fixe de support destinée à être associée en haut du dossier dudit siège,
- une partie mobile d'appui de la tête associée par un dispositif de liaison à ladite partie fixe,
ledit dispositif de liaison comprenant un premier jeu de bielles pourvu de :
- deux bielles arrière de même longueur dont les extrémités arrière sont articulées à la partie fixe selon un premier et un deuxième axes transversaux écartés d'une distance donnée,
- une bielle médiane articulée par ses extrémités aux extrémités avant desdites bielles arrière selon un troisième et un quatrième axes transversaux écartés de ladite distance donnée,
- deux bielles avant de même longueur dont les extrémités arrière sont articulées auxdites bielles médiane et arrière selon lesdits troisième et quatrième axes, lesdites bielles avant étant articulées par leurs extrémités avant à la partie mobile selon un cinquième et un sixième axes transversaux écartés de ladite distance donnée.

Avec l'agencement proposé, on met en jeu, comme précisé plus haut, un principe de « double parallélogramme » permettant une conservation de l'assiette de la partie mobile tout en permettant son réglage selon une pluralité de positions verticales - respectivement longitudinales - pour un réglage longitudinal - respectivement vertical - donné.

Il en résulte, comme précisé plus haut, une possibilité de suppression du dispositif complémentaire de réglage en hauteur, utilisé dans les réalisations de l'art antérieur, permettant de faire coulisser verticalement la partie fixe par rapport au dossier du siège.

La conception de l'appui-tête s'en trouve alors simplifiée.

De même que décrit précédemment, le premier et le deuxième axe en vue latérale peuvent être sensiblement alignés verticalement.

Il peut en outre être prévu que le dispositif de liaison comprenne un deuxième jeu de bielles image du premier jeu par rapport à un plan de symétrie vertical longitudinal.

Par ailleurs, au moins certaines des bielles peuvent être articulées entre elles par des rivets serrant de manière à assurer un maintien en place de la partie mobile par friction lors de la mise en configuration de déverrouillage.

Selon la réalisation représentée en figure 12, la partie mobile 4 est solidaire d'une coque 23 logeant la partie fixe 2, le dispositif de liaison et le dispositif de verrouillage, ladite coque comprenant au moins une ouverture 24 en oblong longitudinal de passage d'une tige 22 d'association de la partie fixe 2 au dossier 3, de sorte que ladite partie mobile puisse débattre verticalement et longitudinalement.

La présence de la coque 23 permet notamment de réaliser un appui-tête 1 « in situ », un mélange précurseur de mousse souple étant injecté dans une coiffe de revêtement dans laquelle a été préalablement disposée ladite coque qui va isoler les dispositifs de liaison et de verrouillage de la mousse, cette dernière venant surmouler ladite coque et ladite coiffe.

## Revendications

1. Appui-tête (1) de siège de véhicule automobile, ledit appui-tête comprenant :
• une partie fixe (2) de support destinée à être associée en haut du dossier (3) dudit siège,
• une partie mobile (4) d'appui de la tête associée par un dispositif de liaison à ladite partie fixe, ledit dispositif étant agencé de manière à permettre au moins un déplacement vertical et longitudinal de ladite partie mobile afin de pouvoir la disposer selon une pluralité de positions de réglage,
• un mécanisme de verrouillage de ladite partie mobile dans la position de réglage choisie,
• une surface de verrouillage (5) solidaire d'une desdites parties et un organe de verrouillage (6) solidaire de l'autre desdites parties, ledit organe étant mobile entre une configuration de déverrouillage, où il est à distance de ladite surface, et une configuration de verrouillage, où il coopère avec ladite surface selon une pluralité de positions verticales et longitudinales sur ladite surface, de manière à permettre le verrouillage de ladite partie mobile dans la position de réglage choisie,
• un dispositif de déverrouillage agencé pour écarter ledit organe de ladite surface, afin de permettre de modifier le réglage de ladite partie mobile, **caractérisé en ce que** l'organe (6) et la surface (5) sont pourvus d'un réseau croisé de butées (8) respectives agencées pour coopérer entre elles en configuration de verrouillage et **en ce que** les butées sont en forme de pyramides inclinées à la base carrée, de façon à présenter quatre faces d'appui (25, 26), de manière à réaliser un verrouillage vertical et longitudinal bidirectionnels.

2. Appui-tête selon la revendication 1, caractérisé en qu'il comprend en outre un moyen ressort (7) d'actionnement de l'organe (6) vers sa configuration de verrouillage lorsque le dispositif de déverrouillage n'est pas activé.

3. Appui-tête selon la revendication 1 ou 2, **caractérisé en ce que** l'organe (6) est monté sur la partie fixe (2), la surface (5) étant montée sur la partie mobile (4).

4. Appui-tête selon l'une quelconque des revendications 1 à 3, **caractérisé en ce que** les butées (8) sont alignées verticalement et longitudinalement.

5. Appui-tête selon l'une quelconque des revendications 1 à 4, **caractérisé en ce**
**que** les faces d'appui (25) mises en jeu entre deux butées (8) coopérant entre elles lorsqu'une force (F1) est appliquée vers le bas ou vers l'arrière sont inscrites dans des plans sensiblement orthogonaux aux directions de ladite force, de sorte qu'un déplacement de la partie mobile (4) vers le bas ou vers l'arrière requière un actionnement du dispositif de déverrouillage.

6. Appui-tête selon l'une quelconque des revendications 1 à 5, **caractérisé en ce**
**que** les faces d'appui (26) mises en jeu entre deux butées (8) coopérant entre elles lorsqu'une d'une force (F2) est appliquée vers le haut ou vers l'avant sont agencées de manière à permettre un déplacement de la partie mobile (4) vers le haut et vers l'avant sans actionnement du dispositif de déverrouillage.

7. Appui-tête selon l'une quelconque des revendications 1 à 6, **caractérisé en ce**
**que** le dispositif de déverrouillage comprend un bouton (9) d'actionnement de l'organe (6) à distance de la surface (5).

8. Appui-tête selon l'une quelconque des revendications 1 à 7, **caractérisé en ce**
**que** le mécanisme de verrouillage comprend deux surfaces (5) et deux organes (6) respectifs, lesdits organes, de même que lesdites surfaces, étant disposés symétriquement par rapport à un plan de symétrie vertical longitudinal dudit appui-tête, la mise en configuration de déverrouillage desdits organes étant assurée par un dispositif de déverrouillage commun.

9. Appui-tête selon la revendication 8, **caractérisé en ce que** les organes (6) sont disposés entre les surfaces (5), le verrouillage se faisant par écartement desdits organes l'un de l'autre.

10. Appui-tête selon la revendication 8, **caractérisé en ce que** les surfaces (5) sont disposées entre les organes (6), le verrouillage se faisant par rapprochement desdits organes l'un de l'autre.

11. Appui-tête selon l'une quelconque des revendications 1 à 10, **caractérisé en ce que** le dispositif de liaison comprend un premier jeu de bielles pourvu de :
• deux bielles arrière (11,12) de même longueur dont les extrémités arrière sont articulées à la partie fixe selon un premier (13) et un deuxième (14) axes transversaux écartés d'une distance donnée (D),
• une bielle médiane (15) articulée par ses extrémités aux extrémités avant desdites bielles arrière selon un troisième (16) et un quatrième (17) axes transversaux écartés de ladite distance donnée,
• deux bielles avant (18,19) de même longueur dont les extrémités arrière sont articulées auxdites bielles médiane et arrière selon lesdits troisième et quatrième axes, lesdites bielles avant étant articulées par leurs extrémités avant à la partie mobile (4) selon un cinquième (20) et un sixième (21) axe transversaux écartés de ladite distance donnée.

12. Appui-tête selon l'une quelconque des revendications 1 à 11, **caractérisé en ce que** la partie mobile (4) est solidaire d'une coque (23) logeant la partie fixe (2), le dispositif de liaison et le dispositif de verrouillage, ladite coque comprenant au moins une ouverture (24) en oblong longitudinal de passage d'une tige (22), de sorte que ladite partie mobile puisse débattre verticalement et longitudinalement.

## Patentansprüche

1. Kopfstütze (1) für einen Kraftfahrzeugsitz, wobei die besagte Kopfstütze Folgendes umfasst:
- einen feststehenden Halterungsabschnitt (2), der dazu bestimmt ist, oben an der Rückenlehne (3) des besagten Sitzes angebracht zu werden,
- einen beweglichen Abschnitt (4) zum Stützen des Kopfes, der durch eine Verbindungsvorrichtung am besagten feststehenden Abschnitt angebracht ist, wobei die besagte Vorrichtung eingerichtet ist, um zumindest eine Vertikal- und Längsverschiebung des besagten beweglichen Abschnitts zu ermöglichen, um diesen in einer Vielzahl von Einstellpositionen anordnen zu können,
- einen Verriegelungsmechanismus für den besagten beweglichen Abschnitt in der gewählten Einstellposition,
- eine Verriegelungsfläche (5), die fest mit einem der besagten Abschnitte verbunden ist, und ein Verriegelungsorgan (6), das fest mit dem anderen der besagten Abschnitte verbunden ist, wobei das besagte Organ zwischen einer Freigabekonfiguration, in der es auf Abstand zur besagten Fläche steht, und einer Verriegelungskonfiguration bewegt werden kann, in der es mit der besagten Fläche entsprechend einer Vielzahl von Vertikal- und Längspositionen auf der besagten Fläche zusammenwirkt, um die Verriegelung des besagten beweglichen Abschnitts in der gewählten Einstellposition zu ermöglichen,
- eine Freigabevorrichtung, die eingerichtet ist, um das besagte Organ von der besagten Fläche abzuheben, um die Einstellung des besagten beweglichen Abschnitts ändern zu können, **dadurch gekennzeichnet, dass** das Organ (6) und die Fläche (5) mit einem gekreuzten Netz an jeweiligen Anschlägen (8) versehen sind, die eingerichtet sind, um miteinander in der Verriegelungskonfiguration zusammenzuwirken, und dadurch, dass die Anschläge in Form von geneigten Pyramiden mit quadratischer Grundfläche ausgeführt sind, um vier Auflageflächen (25, 26) aufzuweisen, um bidirektionale Vertikal- und Längsverriegelungen durchzuführen.

2. Kopfstütze nach Anspruch 1, **dadurch gekennzeichnet, dass** sie darüber hinaus ein Federmittel (7) zur Betätigung des Organs (6) in seine Verriegelungskonfiguration umfasst, wenn die Freigabevorrichtung nicht aktiviert ist.

3. Kopfstütze nach Anspruch 1 oder 2, **dadurch gekennzeichnet, dass** das Organ (6) auf dem feststehenden Abschnitt (2) montiert ist, wobei die Fläche (5) auf dem beweglichen Abschnitt (4) montiert ist.

4. Kopfstütze nach einem der Ansprüche 1 bis 3, **dadurch gekennzeichnet, dass** die Anschläge (8) in Vertikal- und in Längsrichtung ausgerichtet sind.

5. Kopfstütze nach einem der Ansprüche 1 bis 4, **dadurch gekennzeichnet, dass** sich die Auflageflächen (25), die zwischen zwei Anschlägen (8) eingesetzt werden, die miteinander zusammenwirken, wenn eine Kraft (F1) nach unten oder nach hinten angewendet wird, in Ebenen befinden, die im Wesentlichen orthogonal zu den Richtungen der besagten Kraft verlaufen, sodass eine Verschiebung des beweglichen Abschnitts (4) nach unten und nach hinten einer Betätigung der Freigabevorrichtung bedarf.

6. Kopfstütze nach einem der Ansprüche 1 bis 5, **dadurch gekennzeichnet, dass** sich die Auflageflächen (26), die zwischen zwei Anschlägen (8) eingesetzt werden, die miteinander zusammenwirken, wenn eine Kraft (F2) nach oben oder nach vorne angewendet wird, derart eingerichtet sind, um eine Verschiebung des beweglichen Abschnitts (4) nach oben und nach vorne zu ermöglichen, ohne die Freigabevorrichtung zu betätigen.

7. Kopfstütze nach einem der Ansprüche 1 bis 6, **dadurch gekennzeichnet, dass** die Freigabevorrichtung einen Knopf (9) zum Betätigen des Organs (6) auf Abstand zur Fläche (5) umfasst.

8. Kopfstütze nach einem der Ansprüche 1 bis 7, **dadurch gekennzeichnet, dass** der Verriegelungsmechanismus zwei Flächen (5) und zwei jeweilige Organe (6) umfasst, wobei die besagten Organe, sowie die besagten Flächen, im Verhältnis zu einer Symmetrieebene in Vertikal- / Längsrichtung der besagten Kopfstütze symmetrisch angeordnet sind, wobei das Setzen der besagten Organe in die Freigabekonfiguration durch eine gemeinsame Freigabevorrichtung erfolgt.

9. Kopfstütze nach Anspruch 8, **dadurch gekennzeichnet, dass** die Organe (6) zwischen den Flächen (5) angeordnet sind, wobei die Verriegelung durch das Entfernen der besagten Organe voneinander erfolgt.

10. Kopfstütze nach Anspruch 8, **dadurch gekennzeichnet, dass** die Flächen (5) zwischen den Organen (6) angeordnet sind, wobei die Verriegelung durch das Annähern der besagten Organe zueinander erfolgt.

11. Kopfstütze nach einem der Ansprüche 1 bis 10, **dadurch gekennzeichnet, dass** die Verbindungsvorrichtung einen ersten Satz an Verbindungsstangen umfasst, versehen mit:
- zwei hinteren Verbindungsstangen (11, 12) derselben Länge, deren hintere Enden an den feststehenden Abschnitt entsprechend einer ersten (13) und einer zweiten (14) querlaufenden Achse angelenkt sind, die in einem gegebenen Abstand (D) zueinander liegen,
- einer mittleren Verbindungsstange (15), die an ihren Enden an den vorderen Enden der besagten hinteren Verbindungsstangen entsprechend einer dritten (16) und einer vierten (17) querlaufenden Achse angelenkt sind, die im gegebenen Abstand zueinander liegen,
- zwei vorderen Verbindungsstangen (18, 19) derselben Länge, deren hintere Enden an den besagten mittleren und hinteren Verbindungsstangen entsprechend der dritten und vierten Achse angelenkt sind, wobei die besagten vorderen Verbindungsstangen an ihren vorderen Enden am beweglichen Abschnitt (4) entsprechend einer fünften (20) und einer sechsten (21) querlaufenden Achse angelenkt sind, die im gegebenen Abstand zueinander liegen.

12. Kopfstütze nach einem der Ansprüche 1 bis 11, **dadurch gekennzeichnet, dass** der bewegliche Abschnitt (4) fest mit einer Schale (23) verbunden ist, die den feststehenden Abschnitt (2), die Verbindungsvorrichtung und die Verriegelungsvorrichtung aufnimmt, wobei die besagte Schale zumindest eine längliche Öffnung (24) in Längsrichtung zum Durchführen eines Stifts (22) umfasst, damit der bewegliche Abschnitt in Vertikal- und Längsrichtung über Bewegungsfreiheit verfügt.

## Claims

1. Headrest (1) for a motor vehicle seat, said headrest comprising:
- a fixed support portion (2) intended to be associated with the top of the backrest (3) of said seat,
- a movable headrest portion (4) associated, by means of a connecting device, with said fixed portion, said device being arranged in order to allow at least a vertical and longitudinal displacement of said movable portion in order to be able to arrange it in a plurality of adjustment positions,
- a locking mechanism for locking said movable portion in the chosen adjustment position,
- a locking surface (5) rigidly connected to one of said portions and a locking member (6) rigidly connected to the other of said portions, said member being movable between an unlocked configuration, in which it is at a distance from said surface, and a locked configuration, in which it engages with said surface in a plurality of vertical and longitudinal positions on said surface, in such a way as to allow said movable portion to be locked in the chosen adjustment position,
- an unlocking device arranged to move said member away from said surface, in order to allow the adjustment of said movable portion to be modified, **characterised in that** the member (6) and the surface (5) are provided with a cross-over network of respective abutments (8) arranged so as to engage with each other in the locked configuration and **in that** the abutments are pyramid-shaped inclined at the square base, so as to have four bearing sides (25, 26), so as to achieve bidirectional vertical and longitudinal locking.

2. Headrest according to claim 1, **characterised in that** it further comprises a spring means (7) for actuating the member (6) to its locked configuration when the locking device is not activated.

3. Headrest according to claim 1 or 2, **characterised in that** the member (6) is mounted on the fixed portion (2), the surface (5) being mounted on the movable portion (4).

4. Headrest according to any one of claims 1 to 3, **characterised in that** the abutments (8) are vertically and longitudinally aligned.

5. Headrest according to any one of claims 1 to 4, **characterised in that** the bearing sides (25) implemented between two abutments (8) engaging with each other when a force (F1) is applied in a downwards or backwards direction, fall within the planes substantially orthogonal to the directions of said force, such that a displacement of the movable portion (4) in a downwards or backwards direction requires actuation of the unlocking device.

6. Headrest according to any one of claims 1 to 5, **characterised in that** the bearing sides (26) implemented between two abutments (8) engaging with each other when a force (F2) is applied in an upwards or forwards direction, are arranged so as to allow the movable portion (4) to be displaced in an upwards and forwards direction without actuating the unlocking device.

7. Headrest according to any one of claims 1 to 6, **characterised in that** the unlocking device comprises a button (9) for actuating the member (6) remotely in relation to the surface (5).

8. Headrest according to any one of claims 1 to 7, **characterised in that** the locking mechanism comprises two surfaces (5) and two respective members (6), said members, in the same manner as said surfaces, being arranged symmetrically in relation to a longitudinal vertical plane of symmetry of said headrest, the placement of said members in the unlocked configuration being performed by a shared unlocking device.

9. Headrest according to claim 8, **characterised in that** the members (6) are arranged between the surfaces (5), the locking taking place by moving said members away from each other.

10. Headrest according to claim 8, **characterised in that** the surfaces (5) are arranged between the members (6), the locking taking place by moving said members closer to each other.

11. Headrest according to any one of claims 1 to 10, **characterised in that** the linking device comprises a first set of connecting rods provided with:
- two rear connecting rods (11, 12) of the same length, the rear ends of which are hinged to the fixed portion along a first (13) and a second (14) transverse axis, separated by a given distance (D),
- one median connecting rod (15) hinged by its ends to the front ends of said rear connecting rods along a third (16) and a fourth (17) transverse axis separated by said given distance,
- two front connecting rods (18, 19) of the same length, the rear ends of which are hinged to said median and rear connecting rods along said third and fourth axes, said front connecting rods being hinged by their front ends to the movable portion (4) along a fifth (20) and a sixth (21) transverse axis separated by said given distance.

12. Headrest according to any one of claims 1 to 11, **characterised in that** the movable portion (4) is rigidly connected to a frame (23) housing the fixed portion (2), the linking device and the locking device, said frame comprising at least one longitudinal oblong aperture (24) for the passage of a bar (22), such that said movable portion can move vertically and longitudinally.
